# EUROPEAN PATENT APPLICATION

(11) **EP 3 769 908 A1**
(43) Date of publication of application: **27.01.2021**
(21) Application number: 19219820.8
(22) Date of filing: 27.12.2019
(51) Int. Cl.: B23Q 3/00, B23Q 11/00, B21D 43/28, B23D 59/00

(54) **A CLEANING SYSTEM WITH AIR CURTAIN**

(30) Priority: 24.07.2019 TR 201911148
(71) Applicant: Kaban Makina Sanayi ve Ticaret Limited Sirketi, Istanbul (TR)
(72) Inventor: Kaban, Salim, Istanbul (TR)
(74) Representative: Yavuzcan, Alev

(57) **Abstract**

The present invention relates to a cleaning system (1) comprising an air curtain for cleaning burrs/chips formed during profile cutting/tooling.

## Description

### Technical Field

The present invention relates to a cleaning system comprising an air curtain for cleaning burrs/chips formed during profile cutting/tooling.

### Prior Art

In the present day, aluminum and PVC profiles are used in door - frame production. These frames are subjected to processes such as cutting and milling to bring them into desired shapes and angles. Chips/burrs formed after cutting the PVC or aluminum profiles/materials are cleaned by blowing away by the operator from the right, left and top. However, they cause scratches in the profiles as these methods do not completely remove the chips formed as a result of the cutting process. Profile chips scattering to the environment are stuck in the moving parts of saw. It is undesirable that the chips formed after cutting deposit in every machine that the profile is introduced. As this situation affects the cutting accuracy of the machine, it reduces the life of the machine and causes the profiles to be scratched. Therefore, there is a need for a system for removing chips/burrs formed during cutting of profiles.

In the state of the art, a dust-free plate cutting machine is mentioned in Chinese patent document no. CN104526056. The cutting machine comprises a cutting device, a cutting platform, a fixing platform and a dust collection chamber. There is suction port at one end of the cutting platform. The suction port provides the dust to be scavenged from the environment during cutting.

### Short Description of Invention

The object of the present invention is to provide a cleaning system comprising an air curtain for cleaning burrs/chips formed during profile cutting/tooling.

Another object of the present invention is to provide a cleaning system comprising an air curtain which prevents the product from being scratched while keeping the floor that the cutting process is performed clean during profile cutting.

### Detailed Description of Invention

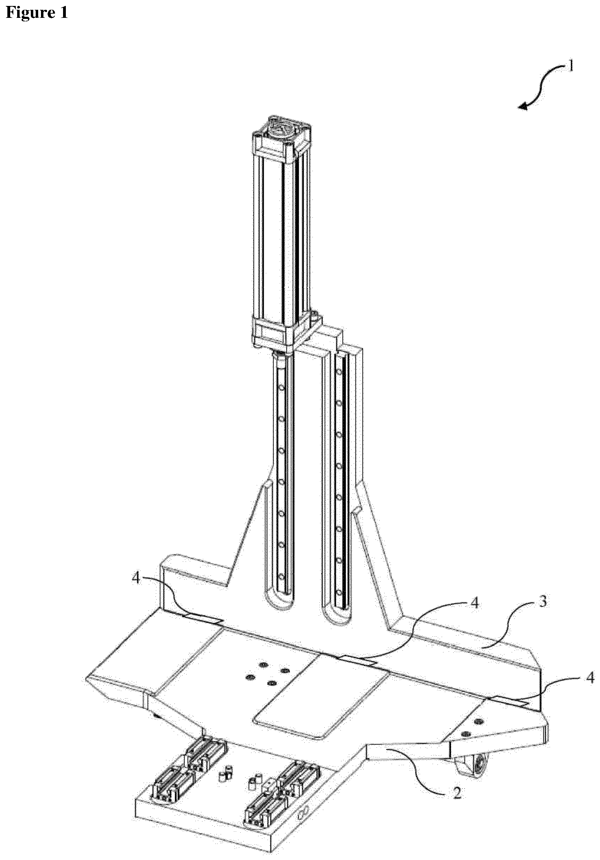

"A Cleaning System with Air Curtain" that was created for achieving intention of this invention was demonstrated in the enclosed figures, and they consist of
**Figure 1****.** Is a general view of the cleaning system according to the invention.

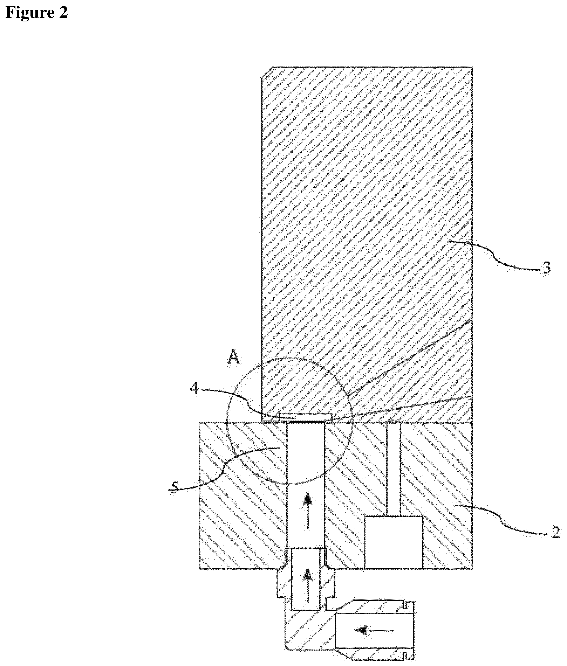

**Figure 2****.** Is a side sectional view of the cleaning system according to the invention.

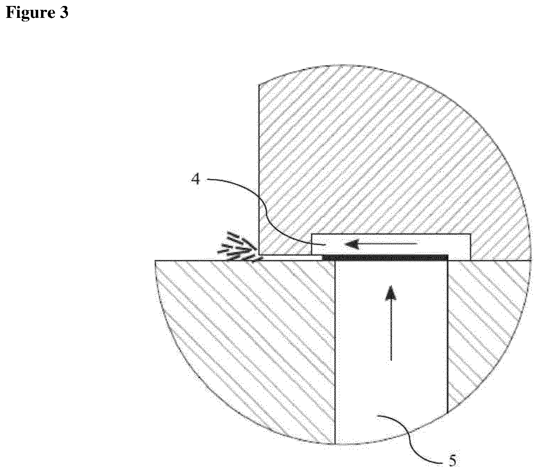

**Figure 3****.** Is the detail of section A in the Figure 2.

Parts in the figures are numbered individually and their correspondences are given below.
1. Cleaning system
2. Lower tray
3. Vertical tray
4. Air curtain
5. Bush

The cleaning system (1) used in cleaning chip/burr cleaning according to the invention comprises of;
- a lower tray (2), on which the profiles are placed and positioned for cutting process,
- a vertical tray (3) standing next to the lower tray (2) and perpendicular to the lower tray (2) and providing the profiles placed on the lower tray (2) to be ready for cutting,
- an air curtain (4) in the form of an opening which removes burrs where the vertical tray (3) and the lower tray (2) are in contact with each other; and
- a bush (5) that sends air to the air curtain (4).

The lower tray (2) in the cleaning system (1) according to the invention is a surface on which the profiles are moved during the cutting and tooling process.

The lower tray (2) in the system (1) according to the invention is a horizontal surface lying parallel to the floor.

The vertical tray (3) in the cleaning system (1) according to the invention is in a position to form a right angle with the lower tray (2). The vertical tray (3) serves as a support part in which the profiles positioned on the lower tray (2) are made ready for cutting.

The air curtain (4) in the cleaning system (1) according to the invention is an opening between the lower tray (2) and the vertical connection points of the vertical tray (3).

The air curtain (4) in the system (1) according to the invention enables the air sent from the bush (5) to be directed onto the lower tray (2).

The air curtain (4) in the system (1) according to the invention provides the air removal of the burrs formed on the lower tray (2) during the cutting and tooling process.

The air curtain (4) in the system (1) according to the invention is activated while the profile on the lower tray (2) is lifted during processing and clears the burrs/chips formed from the surface of the lower tray (2). Thus, it is ensured that the profile introduced on the lower tray (2) always lies on a clean surface.

The air curtain (4) in the system (1) according to the invention can be used more than once according to the size of the lower tray (2).

The air curtain (4) in the system (1) according to the invention can be used to remove the burrs/chips formed by the materials in all machines where cutting and tooling is applied by introducing the material on a surface.

The bush (5) in the cleaning system (1) according to the invention is in the form of a channel that enables air passage through it and carries air to the air curtain (4).

The bush (5) in the system (1) according to the invention rises through the lower tray (2) and connects with the air curtain (4).

By means of the cleaning system (1) according to the invention, the burrs formed on the lower tray (2) during the profile cutting process are removed by the air blown from the bush (5) through the air curtain (4). Thus, the profile moved in the lower tray (2) does not come into contact with the burrs and the formation of scratches on their surfaces is prevented 100%.

Around these basic concepts,; it is possible to develop a wide variety of applications with the invention of the section handling machine "A Cleaning System with Air Curtain" subject to the invention, the invention can not be limited to the examples disclosed herein, it is essentially as specified in the claims.

## Claims

1. A cleaning system according to the invention and used in burrs/chips cleaning; **characterized in that**;
- a lower tray (2), on which the profiles are placed and positioned for cutting process,
- a vertical tray (3) standing next to the lower tray (2) and perpendicular to the lower tray (2) and providing the profiles placed on the lower tray (2) to be ready for cutting,
- an air curtain (4) in the form of an opening which removes burrs where the vertical tray (3) and the lower tray (2) are in contact with each other; and - a bush (5) that sends air to the air curtain (4).

2. A cleaning system (1) according to Claim 1, **characterized in that** the lower tray (2) is a surface on which the profiles are moved by introducing during cutting and tooling.

3. A cleaning system (1) according to Claims 1 or 2, **characterized in that** the lower tray (2) is a horizontal surface parallel to the floor.

4. A cleaning system (1) according to any of the Claims above, **characterized in that** the vertical tray (3) is in a position to form a right angle with the lower tray (2).

5. A cleaning system (1) according to any one of the claims above, **characterized in that** the vertical tray (3) serves as a support part, on which the profiles positioned on the lower tray (2) are made ready for cutting.

6. A cleaning system (1) according to any one of the claims above, **characterized in that** the air curtain (4), which is an opening between the vertical joining points of the lower tray (2) and the vertical tray (3).

7. A cleaning system (1) according to any one of the claims above, **characterized in that** an air curtain (4) which allows the air sent from the bush (5) to be directed onto the lower tray (2).

8. A cleaning system (1) according to any one of the claims above, **characterized in that** an air curtain (4) which enables the air removal of burrs formed on the lower tray (2) during the cutting and tooling procedure.

9. A cleaning system (1) according to any one of the claims above, **characterized in that** an air curtain (4) which ensures that the profile introduced on the lower tray (2) always sits on a clean surface by cleaning the burrs/chips on the lower tray (2) from the surface of the lower tray (2), which occurs during lifting and tooling application of the profile.

10. A cleaning system (1) according to any one of the claims above, **characterized in that** air curtains (4) which can be used for more than one according to the size of the lower tray (2).

11. A cleaning system (1) according to any one of the claims above, **characterized in that** the air curtain (4) in the system (1) according to the invention can be used to remove the burrs/chips formed by the materials in all machines where cutting and tooling is applied by introducing the material on a surface.

12. A cleaning system (1) according to any one of the claims above, **characterized in that** a bush (5) which carries air to the air curtain (4) and which enables air passage through it.

13. A cleaning system (1) according to any one of the claims above, **characterized in that** a bush (5) which rises through the lower tray (2) and joins the air curtain (4).
